# EUROPÄISCHE PATENTSCHRIFT

(11) **EP 3 249 238 B1**
(45) Veröffentlichungstag und Bekanntmachung des Hinweises auf die Patenterteilung: **26.06.2019**
(21) Anmeldenummer: 16290093.0
(22) Anmeldetag: 27.05.2016
(51) Int. Cl.: F04D 29/38, F03D 1/06, F03D 7/02, B04B 5/12, B01D 45/14

(54) **AUS EINEM ZU MEHREREN SCHLEIFEN GEKRÜMMTEN BAND ERSTELLTER ROTOR FÜR DIE INTERAKTION MIT EINEM FLUID**
ROTOR MADE OF A RIBBON CURVED INTO A PLURALITY OF LOOPS, FOR THE INTERACTION WITH A FLUID
ROTOR CONSISTANT EN UN RUBAN COURBÉ EN UNE PLURALITÉ DE BOUCLES, POUR L'INTERACTION AVEC UN FLUIDE

(43) Veröffentlichungstag der Anmeldung: 29.11.2017
(73) Patentinhaber: Abendschein, Gûnter, 77781 Biberach (DE); Greinke, Yves, 67100 Strasbourg (FR)
(72) Erfinder: Abendschein, Gûnter, 77781 Biberach (DE); Greinke, Yves, 67100 Strasbourg (FR)
(74) Vertreter: Bernasconi, Jean Raymond

(56) Entgegenhaltungen:
- AT-B- 111 376
- DE-A1- 3 331 166
- DE-A1-102010 003 994
- DE-U1-202014 104 399
- FR-A- 819 229
- US-A- 6 099 256

## Beschreibung

Diese Erfindung bezieht sich auf einen Rotor mit Betätigung eines Fluids oder durch ein Fluid und auf die Motor- oder Generatorenvorrichtungen, die ihn umfassen.

Bekannt sind zahlreiche Vorrichtungen, wie z. B. durch einen Fluidstrom betätigte Turbinen, ein Fluid antreibende Kompressoren oder Pumpen und Ventilatoren mit Rotoren mit Flügeln, Schrauben oder sonstigen verschiedenen Formen.

Das Dokument FR 819 229 A offenbart einen Rotor gemäß dem Oberbegriff von Anspruch 1.

Diese Erfindung schlägt die Bereitstellung eines Rotors vor, der sehr einfach herzustellen ist, in den unterschiedlichsten Vorrichtungen und Maschinen verwendbar ist und mit den unterschiedlichsten flüssigen oder gasförmigen Fluiden funktionieren kann.

Gegenstand der Erfindung ist ein Rotor gemäß Anspruch 1.

Die Linie kann in Form einer 8, die zwei diametral entgegengesetzte Keulen (3,6) bildet, sein.

Die Linie kann drei Keulen in Form eines Kleeblattes besitzen.

Die Linie kann vier Keulen besitzen, die jeweils zu zweit diametral entgegengesetzt sind.

Der Rotor ist auf bevorzugte Weise derart realisiert, dass die Neigung der Vorderseite des im Querschnitt betrachteten Blattes in deutlich jeder axialen geometrischen Ebene zu der der Rückseite komplementär ist. Mit anderen Worten, die Vorder- und Rückseiten sind in jedem Punkt deutlich parallel oder, wenn sie ein wenig gewölbt sind, in jeder dieser radialen Abschnittsebenen im Verhältnis zueinander symmetrisch. Dies kann einfach durch Bilden des Blattes per Verformung eines ursprünglich ebenen Blattes erreicht werden.

Dann reagiert der Rotor auf genau dieselbe Weise mit dem Strom des Fluids, wie dieser sich in der einen oder der anderen Richtung der Achse verschiebt, wobei der Rotor einfach die Richtung ändert.

Der Abstand zwischen den axial gespreizten zentralen Punkten kann fest oder einstellbar oder durch den Schub des Fluids veränderbar sein. Somit kann man denselben Rotor an unterschiedliche Leistungsströme anpassen. Indem sie einen der zentralen Punkte des Rotors auf der Achse im Verhältnis zum anderen mit optionaler Zwischenschaltung einer Feder frei gleiten lässt, kann sich die erfindungsgemäße Vorrichtung an den Schub des Fluids anpassen, z. B. um eine konstante oder begrenzte Rotationsgeschwindigkeit aufrecht zu erhalten.

Durch solche axiale Strecken des Rotors verändert sich der Rotorwinkel so dass das Fluid durch entlang eine grosse Länge (oder mehrere Längen) des Blattumfangs nach aussen in einer Drehrichtung orientiert wird, und entlang einer andere grosse Länge (oder mehrere Längen) nach innen aber in derselben Drehrichtung orientiert wird. So gibt es keinen Strömungsabriss, und weniger Geräusche, aber eine gute Leistung.

Der zentrale Teil des Rotors kann von einer den Durchgang des Fluids begrenzenden, bevorzugt einer Revolutionswand, z. B. einer gewölbten oder zylindrischen Wand, bevorzugt mit einem vorgeschalteten, zugespitzten Ende gegenüber dem eintretenden Strom derart umgeben sein, dass der Strom den zentralen Teil des Blattes mit den zentralen Punkten vermeidet.

In einer Realisierungsform ist das Blatt ausgehend von einem deutlich ebenen Material gebildet, das per Entfernung der axial entfernten beabstandeten Punkte verformt ist.

In einer anderen Realisierungsform, die jedoch nicht zur Erfindung gehört, entspricht das Blatt der Form, die per Verformung einer Linie aus verformbarem Material, ursprünglich in Form eines Kreises und in Form einer 8 verformt, erhalten wird, wobei sich die Oberfläche des Blattes deutlich gemäß den Richtungen erstreckt, die von den radialen Verlängerungen aus Material eingeschlagen werden, die ursprünglich in der Ebene des Kreises angeordnet waren.

Die Oberfläche des Blattes ist durchgehend.

Das Blatt kann aus Metall oder aus synthetischem Material sein. Es kann per Verformung erhalten werden oder seine endgültige Form per Abformen erhalten.

Das größte Drehmoment wird in den Bereichen des von der Rotationsachse am weitesten entfernten Blattes ausgeübt. In dem - bevorzugten Fall - in dem das Blatt per Veränderung des Achsabstandes verformbar ist, ist die Verformung in diesen Bereichen maximal.

Die Breite C des Blattes kann deutlich konstant oder entlang der medianen Linie des Blattes unterschiedlich sein. Diese Breite C ist bevorzugt wenigstens bei den radial am weitesten von dem Blatt entfernten Bereichen zwischen 10 % und 40 % von dem maximalen Durchmesser A des Blattes inbegriffen. Die Breite B von des Keule ist zum beispiel zwischen 80 und 130 % von dem maximalen Durchmesser A des Blattes inbegriffen.

Die Abmessungen des erfindungsgemäßen Rotors können je nach den Anwendungen sehr unterschiedlich sein. Z. B. kann der maximale Durchmesser A zwischen 4 cm und 10 m inbegriffen sein.

Gegenstand der Erfindung sind ebenfalls Vorrichtungen zur Betätigung von Fluiden oder die durch ein Fluid mithilfe mindestens eines erfindungsgemäßen Rotors betätigt werden, sowie die Anwendungen und Verwendungen dieser Vorrichtungen.

Je nach Einsatz können die einzelnen Rotoren einzeln, also unabhängig, montiert werden, oder alle fest auf einer gemeinsamen Welle montiert werden.

In solchen Vorrichtungen kann der Rotor (oder mehrere axial entfernten Rotoren) durch eine Wandung umgeben werden die die Strömung in axialer Richtung beibehaltet. Die Wandung, zum Beispiel ein Zylinder oder ein Konus, kann vorzugsweise mit einem Eingangstrichter (und/oder Ausgangstrichter versehen werden.

Der erfindungsgemäße Rotor kann ebenfalls verwendet werden, um durch ein gasförmiges oder flüssiges Fluid betätigt zu werden, um eine z. B. elektrische Energie durch Betätigen eines Generators oder eine mechanische Energie, z. B. zum Antreiben einer Pumpe, zu erzeugen oder im Gegenteil durch einen Motor betätigt zu werden, um einen Strom des Fluids, z. B. um eine Ventilation oder ein Pumpen zu gewährleisten, zu erzeugen.

Sie kann mit einem Fluid verwendet werden, das sich axial in jeder beliebigen Richtung verschiebt, indem sie unabhängig von der Richtung dieselben Leistungen aufweist. Für eine derartige Verwendung kann man den Rotor mit einer festen zylindrischen oder kegelstumpfartigen Wand umgeben, die das Fluid leitet.

Allerdings ist festzustellen, dass der Rotor ebenfalls für ein radial gerichtetes oder im Verhältnis zu der Achse des Rotors geneigt gerichtetes Fluid sensibel ist. Diese Fähigkeit ist besonders bei Fluiden mit zufälliger Richtung interessant, z. B. beim Wind.

Die Rotationsgeschwindigkeit hängt von der Geometrie des Blattes und des Fluiddurchsatzes ab. Sie kann z. B. in der Größenordnung von 1 bis 100 Rotationen pro Minute liegen.

Die den erfindungsgemäßen Rotor umfassenden Vorrichtungen können insbesondere die folgenden Vorrichtungen sein.

Trennvorrichtungen von festen und / oder flüssigen Partikeln, die in Atmosphären oder gasförmigen Strömen enthalten sind.

Vorrichtung zur Erzeugung elektrischer Energie per Antrieb eines insbesondere in eine marine Strömung oder einen Fluss oder einen Wellenstrom eingetauchten Stromgenerators. In diesen Fällen umfasst die Vorrichtung bevorzugt eine z. B. zylindrische Wand, die den Rotor umgibt.

Vorrichtung zur Erzeugung elektrischer oder nicht elektrischer Energie, die durch eine Kanalisation mit druckbeaufschlagter Flüssigkeit oder druckbeaufschlagtem Gas versorgt wird.

Vorrichtung zur Erzeugung von elektrischer Energie per Antrieb durch einen Wind-Stromgenerator.

Ventilationsvorrichtung unter Einschluss für die Motorkühlung.

Luft- oder Gasextraktionsvorrichtung mit einem durch einen Motor angetriebenen Rotor. Z. B. ist es möglich, einen Rotor vorzusehen, der durch eine z. B. vertikale Achse angetrieben wird, wobei die genannte Achse selbst durch einen ähnlichen Rotor angetrieben wird, der an einem Ende der aus dem zu behandelnden Raum herausragenden Achse befestigt ist und vom Wind angetrieben wird.

Ein Fluid antreibende Pumpe.

Motorvorrichtung für ein Boot, wobei der Rotor als Schraube oder als Antrieb dient. Ein derartiger Antrieb erweist sich als besonders geräuscharm im Vergleich zu einer traditionellen Schraube.

Weitere Vorteile und Merkmale der Erfindung werden bei der Lektüre der nachfolgenden Beschreibung deutlich, die als nicht einschränkendes Beispiel unter Bezugnahme auf die beigefügten Zeichnung abgegeben wird, in der:
Figur 1 eine schematische, perspektivische Ansicht eines erfindungsgemäßen Rotors mit zwei Keulen gemäß einer ersten Realisierungsform ist,
Figur 2 eine schematische vordere Ansicht eines erfindungsgemäßen Rotors mit zwei Keulen ist,
Figur 3 eine schematische vordere Ansicht eines Rotors mit drei Keulen ist,
Figur 4 eine schematische vordere Ansicht eines Rotors mit vier Keulen ist,
Figur 5 eine schematische, perspektivische Ansicht eines Rotors mit zwei Keulen gemäß einer zweiten Realisierungsform, die nicht zur Erfindung gehört, ist,
Figur 6 stellt eine schematische Teilansicht einer Trennvorrichtung von festen und / oder flüssigen Partikeln im axialen Schnitt dar, die in Atmosphären oder gasförmigen Strömen enthalten sind.

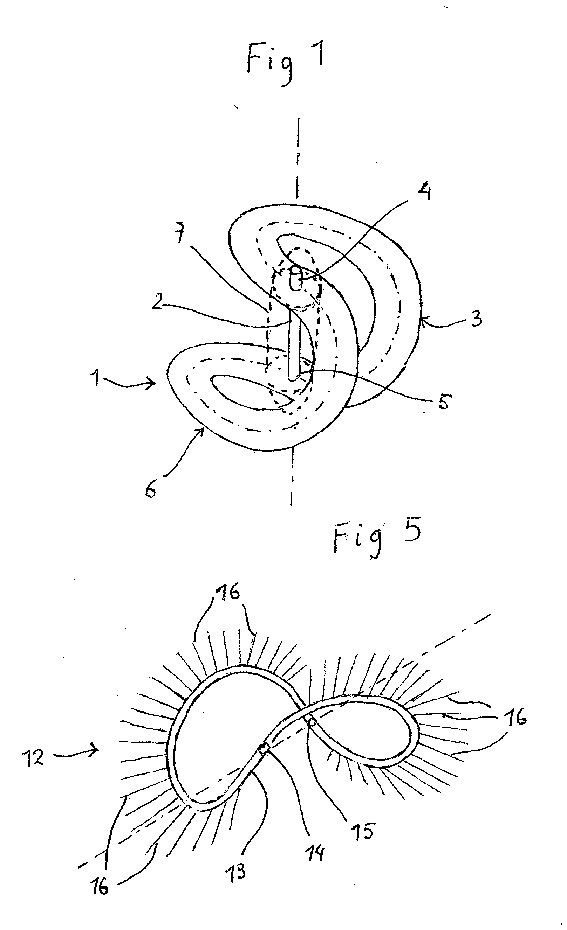

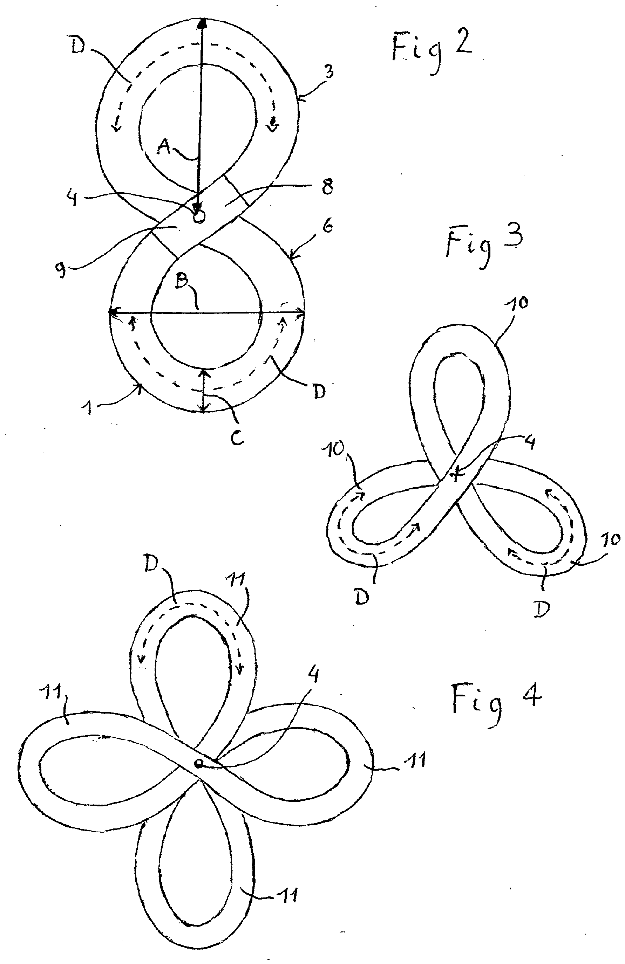

Es wird auf die Figuren 1 und 2 Bezug genommen.

Der Rotor 1 ist um eine Welle 2 angeordnet, die rotierend auf (nicht dargestellten) Lagern montiert ist. Er kann direkt oder durch ein Getriebe einen sich hinter der Welle 2 befindenden (nicht dargestellten) Stromgenerator antreiben. Der Rotor besitzt eine erste Keule 3, die sich von einem vorgeschalteten zentralen Punkt 4 erstreckt, in dem sie auf der Welle 2 bis zu einem nachgeschalteten zentralen Punk 5 befestigt ist, der ein die Welle 2 umgebendes Loch aufweist, was es diesem dem Rotor nachgeschalteten Punkt ermöglicht, axial entlang der Welle 2 zu gleiten. Sie wird im Punkt 2 durch eine zweite Keule 6 fortgesetzt, die zu dem vorgeschalteten zentralen Punkt 4 stößt, wobei der Rotor somit ein kontinuierliches Band bildet, dessen eine (in Figur 1 sichtbare) Seite in vorgeschalteter Richtung ausgerichtet ist, wobei die andere Seite in nachgeschalteter Richtung ausgerichtet ist.

Es ist möglich, die Welle 2 mit einer z. B. zylindrischen Wand 7 mit einem oder zwei konischen Enden zu umgeben. Diese Wand kann in Form von zwei teleskopischen Abschnitten realisiert werden, um eine axiale Bewegung des hinteren zentralen Punktes 5 entlang der Rotationsachse des Rotors zu erlauben.

Wie in Figur 1 zu sehen, kann der Rotor per Ausschneiden aus einer z. B. metallischen Folie realisiert sein, aus der ein Band in Form einer 8 ausgeschnitten wird, indem ein zentraler Teil 8 ununterbrochen gelassen wird, dann dieser Teil durch ein kurzes Folienband 9 ersetzt wird, das an den gegenüberliegenden Enden befestigt oder verschweißt wird, wobei der z. B. vorgeschaltete zentrale Punkt 4 z. B. per Bohrung für die Montage und die Befestigung auf der Welle 2 realisiert ist, der nachgeschaltete zentrale Teil selbst in Punkt 5 durchbohrt ist. Nachdem das Band somit praktisch in einer und derselben Ebene an seinen Anfangspunkt zurückgeführt ist, werden die zentralen Punkte axial beabstandet, was das Band per elastischer bzw. anschließend plastischer Verformung verformt und somit wird die in Figur 1 dargestellte Bandform erhalten, in der festzustellen ist, dass eine vorgeschaltete Bandoberfläche erhalten wird, die wenigstens in der Mehrzahl ihrer Punkte im Verhältnis zu der jedem dieser Punkte entsprechenden radialen Ebene eine tangentiale Neigung besitzt, die ausgerichtet ist, um eine Komponente der Fluidbewegung in derselben Rotationsrichtung zu gewährleisten.

Die nachgeschaltete Oberfläche des Bandes besitzt auf bemerkenswerte Weise dieselben Eigenschaften, wobei die Rotationsrichtung einfach umgekehrt ist, wenn das Fluid von hinten auf der nachgeschalteten Seite des Rotors eintrifft.

Darüber hinaus ist festzustellen, dass der Rotor sich auch dreht, wenn ein Strom des Fluids in transversaler Richtung geschickt wird, d. h. lotrecht zur Rotationsachse.

Im Übrigen ist festzustellen, dass diese tangentialen Neigungen zur Rückseite ansteigen, wenn die zentralen Punkte 4, 5 sich weiterentfemen , was den Erhalt einer Verringerung des Widerstandes gegenüber dem Strom des Fluids zulässt, was eine Regulierung z. B. der Rotationsgeschwindigkeit erleichtert, wenn der von dem Fluid ausgeübte Druck ansteigt. Es ist ebenfalls möglich, das Funktionieren des Rücklaufs durch positives Einwirken auf die Beabstandung der Punkte 4, 5 durch ein beliebiges mechanisches Steuermittel zu ändern.

Es ist ebenfalls möglich, die Keule durch jedes andere Mittel, z. B. durch Abformen oder Tiefziehen, per Vorsehen einer Form vorzusehen, die zu der des verformten Bandes analog ist.

Erfindungsgemäß sind die der Achse des Bandes nahen Teile durchgehend. Sie spielen bei der Erzeugung des Drehmoments nur eine vernachlässigbare Rolle.

Der Rotor kann aus jedem beliebigen geeigneten, insbesondere metallischen Material oder aus verstärktem oder nicht verstärktem synthetischen Material oder aus Elastomer realisiert sein.

Unter Bezugnahme auf Figur 3 wird ein Rotor in Form eines Rings mit drei Keulen 10 dargestellt. Unter Bezugnahme auf Figur 4 wird ein Rotor in Form eines Bandes mit vier Keulen 11 dargestellt.

Diese Keulen können insbesondere per Ausschneiden der Keulen und dann Zusammensetzung hergestellt werden, damit die zentralen Teile entlang der geometrischen Achse geflüchtet sind. Es ist nicht unerlässlich, dass sich eine Materialwelle durch den oder die zentralen Zwischenteil(e) erstreckt.

Es wird auf Figur 5 Bezug genommen.

In dieser Realisierungsform, die nicht zur Erfindung gehört, ist der Rotor 12 ausgehend von einem Draht, einer Stange oder einer steifen, jedoch verformbaren Röhre 13 realisiert, die zu Anfang einen Kreis oder ein Oval in einer Ebene bildet. Dieses Element wird an zwei diametral entgegengesetzten Stellen 14, 15, die zentrale Punkte bilden und z. B. Durchgänge oder Teile aufweisen, die ihre Montage auf einer rotierenden Welle zulassen, ergriffen. Anschließend wird das Elemente 13 verformt, bis ihm von vorn betrachtet die Form einer 8 gegeben wird und es wird ebenfalls das Element auf einer Welle montiert, das durch die in der Figur angezeigte geometrische Achse dargestellt ist. In der Zeichnung werden Stifte 16 dargestellt, die zu Anfang radial auf der externen Seite des Kreises befestigt und in derselben Ebene angeordnet sind.

Festzustellen ist, dass nach der Verformung die Stifte 16 sich auf einer geometrischen Oberfläche angeordnet befinden, die ähnliche Neigungseigenschaften haben wie die der Oberfläche des Rotors 1, d. h. im Verhältnis zur entsprechenden radialen Ebene eine tangentiale Neigung aufweisen, die ausgerichtet ist, um eine Komponente der Fluidbewegung in derselben Rotationsrichtung zu gewährleisten.

Diese geometrische Oberfläche kann z. B. durch ein relativ elastisches und verformbares Band dargestellt sein, das durch die Stifte 16 getragen wird, z. B. ein Band aus Plastikmaterial mit einer geringen Dicke, oder die Stifte 16 können auch flache Flügel tragen, die zwei oder mehr aufeinander folgende Stifte abdecken. Es ist auch möglich, auf dem Element 13 direkt Flügel zu befestigen, die sich radial in der Ebene des anfänglichen Kreises erstrecken, wobei zwei aufeinander folgende Flügel durch einen Raum getrennt sind, der zu dem Elementsegment 12 hinführt, das einer Elastizität entspricht, die ihre Verformung erlaubt, um die Form einer 8 zu erhalten.

Benutzungsbeispiele der erfindungsgemäßen Vorrichtung.

### Beispiel 1: Trennvorrichtung von festen und / oder flüssigen Partikeln, die in Atmosphären oder gasförmigen Strömen enthalten sind.

Um eine Partikel enthaltende Atmosphäre zu reinigen, z. B. in einem Bearbeitungsraum von Metallen, die eine hohe Menge von Bearbeitungsöltröpfchen und Partikeln oder Metallschnitzeln enthält, wird diese Atmosphäre im Allgemeinen durch eine Ansaugleitung abgesaugt, die zu einem Filter führt, hinter dem eine gewöhnliche Ansaugvorrichtung angeordnet ist. Der Filter verstopft relativ schnell und muss häufig behandelt oder ersetzt werden. Um diesen Nachteil zu beheben, wird eine erfindungsgemäße Vorrichtung dazwischen geschaltet.

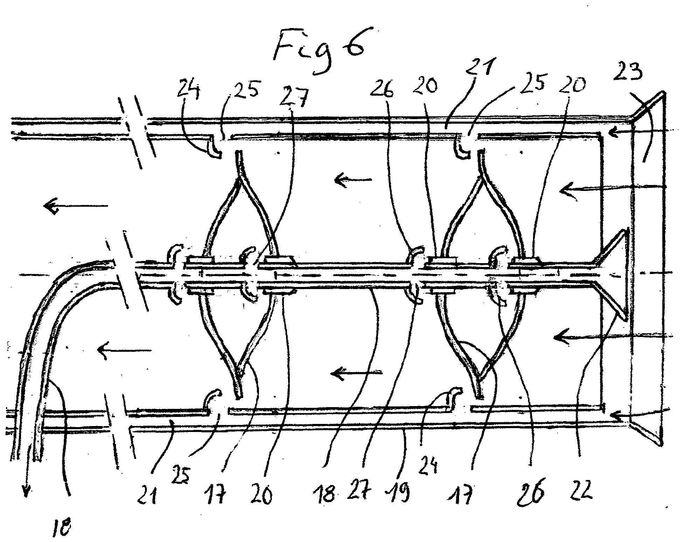

Die auf Figur 6 vorgestellte Vorrichtung umfasst wenigstens ein Metallrotor 17 analog zu dem Rotor 1, der um eine feste röhrenförmige Achse 18 rotiert, die von einer zylindrischen Wand 19 umgeben ist. Der oder die Rotor(en) 17 ist (sind) an ihren Zentralteilen auf einem oder mehreren Anschlussstück (Anschlussstücken) 20 montiert, die jeweils ihren Rotor durchqueren und Rotorlagerung bilden, wobei jeder Rotor frei um das Rohr 18 drehen kann, z. B. mit Zwischenschaltung eines (nicht dargestellten) Kugellagers zwischen der Röhre 18 und dem Anschlussstück 20. Die zylindrische Wand 19 kann aus zwei gespreizten konzentrischen Röhren gebildet sein, die untereinander einen zylindrischen Durchgang 21 frei lassen. An ihre vorgeschalteten trichterförmigen Enden 22, 23 münden die Röhre 18 und die doppelte Wand 19 in das anzusaugende Gasvolumen, z. B. eine Einkapselung einer Werkzeugmaschine, z. B. eine Fräse oder Drehbank, deren Werkzeug derart permanent mit Öl begossen wird, dass es einen Nebel aus Öl und metallischen Partikeln oder kleinen Schnitzeln produziert. Das nachgeschaltete Ende des Rohrs 18 und der Leitung 19 ist auf übliche Weise mit einer Ansaugvorrichtung unter Zwischenschaltung eines Filters angeschlossen, der die Öltröpfchen und die Partikel zurückhält.

Der die Partikel und die Tröpfchen enthaltende Luftstrom oder der Nebel wird zum Filter angesaugt und ruft die Rotation der Rotoren 17 hervor, deren Blatt die Partikel und Tröpfchen ableitet, die auf die vorgeschaltete Seite des Rotors auftreffen. Genauer gesagt, ist dank der unterschiedlichen Neigungen, die entlang des erfindungsgemäßen Blattes vorhanden sind, festzustellen, dass ein Teil des gasförmigen Stroms zur Peripherie geschleudert wird, d. h. der inneren Seite der umlaufenden Leitung 19, während ein anderer Teil zu der zentralen Röhre 18 geschleudert wird und dabei gleichzeitig die Bildung von Öltropfen hervorgerufen wird. Die zur Peripherie geschleuderte Mischung aus Tropfen und damit auch Partikeln wird hinter jeden Rotor durch einen stromaufwärts offenen rinnenförmigen Ablaufschnabel 24 aufgenommen und eingesaugt, der durch Öffnungen oder Löcher 25 mit dem Durchgang 21 verbindet ist, und die zur Rotationachse geschleuderte Mischung wird durch stromaufwärts offene rinnenförmige Ablaufschnabel 26 aufgenommen, die jeweils stromabwärts hinter dem entsprechenden Anschlussstück auf dem Rohr 18 befestigt sind und durch Öffnungen oder Löcher 27 mit dem inneren Durchgang des Rohres 18 verbindet sind, derart dass die Partikel oder Tropfen nachgeschaltet zu einem Austrag geleitet werden, z. B. zu einem (nicht dargestellten) Aufnahmebecken. Diese Durchführung kann weiterhin durch eine Druckdifferenz zwischen dem Volumen, in dem die Rotoren 17 rotieren, und dem Inneren des Rohrs 18 und dem Volumen 21 unterstützt werden. Es ist ebenfalls möglich, Ansaugmittel vorzusehen, die eine derartige Druckdifferenz herstellen.

In dem dargestellten Beispiel haben die Rotoren 17 alle dieselbe Größe, doch können auch unterschiedliche Größen vorgesehen werden. Z. B. kann ein vorgeschalteter Teil der peripherischen Leitung 19 mit einem reduzierten Durchmesser einen oder mehrere Rotor(en) mit einem entsprechenden reduzierten Durchmesser umfassen und sich bevorzugt durch eine progressive kegelstumpfartige Erweiterung durch einen Teil mit einem größeren Durchmesser fortsetzen, der eine Vielzahl von Rotoren mit großem Durchmesser umfasst, und dann optional durch einen nachgeschalteten Teil mit einem reduzieren Durchmesser, der einen oder mehrere entsprechende(n) Rotor(en) umfasst.

Die verschiedenen Rotoren können unabhängig auf dem wellenförmigen Rohr 18 gelagert sein, aber man kann auch die Rotoren auf einen sich drehende Rohr fest montieren.

### Beispiel 2: Windgeneratorvorrichtung

Die Vorrichtung umfasst an der Spitze eines Mastes eine horizontale Welle, die einen Rotor trägt und einen Stromgenerator antreibt, wie ein klassischer Windgenerator. Der vorgeschaltete zentrale Punkt des Rotors wird auf der Welle befestigt, während sein nachgeschalteter zentraler Punkt entlang der Welle gleiten und dabei gleichzeitig in Rotation damit fest befestigt sein kann. Bei Vorhandensein von Wind verschiebt sich der nachgeschaltete zentrale Punkt unter dem Schub des Windes nach unten und entfernt sich von dem festen vorgeschalteten, zentralen Punkt auf der Welle, was eine Verformung der Schleifen des Rotors hervorruft, die den Windwiderstand des Rotors verringert. Somit lässt sich die Rotationsgeschwindigkeit selbst bei einem heftigen Wind in akzeptablen Grenzen halten. Wenn der Wind schwächer wird, verschiebt sich der nachgeschaltete zentrale Punkt nach oben, z. B. unter der Wirkung der dem Rotor eigenen elastischen Rückholkraft oder auch unter der Wirkung einer auf der Welle montierten Rückholfeder.

### Beispiel 3. Vorrichtung zur Erzeugung von Energie durch Strömungen oder durch Gezeiten.

Die eingetauchte Vorrichtung umfasst einen Rotor, dessen Achse in der Richtung der Strömung z. B. des Flusses oder der See ausgerichtet ist und damit einen Stromgenerator antreibt. Die Vorrichtung wird bevorzugt von einer zylindrischen Wand umgeben. Sie ist aus einem korrosionsbeständigen Material hergestellt oder damit beschichtet. Bei einer Umkehr des Stroms, z. B. der Gezeiten, beginnt der Rotor wieder sich zu drehen - in umgekehrter Rotationsrichtung.

### Beispiel 4. Ventilationsvorrichtung.

Die Vorrichtung wird an dem oberen Ende einer vertikalen Ventilationsleitung an einem Dach oder einem Schacht angeordnet. Die Welle wird in der geometrischen Achse der Leitung vertikal montiert. An ihrem unteren Ende trägt sie einen ersten Rotor, dessen Rotation einen aufsteigenden Strom der Luft des zu ventilierenden Raums hervorruft. An ihrem oberen Ende, das oberhalb des oberen Endes der Leitung und damit an der frischen Luft übersteht, trägt sie einen zweiten Rotor, der unabhängig von seiner horizontalen Richtung sensibel für Wind ist. Bei Wind verursacht die Rotation des oberen Rotors das Drehen der Welle und des unteren Rotors, der die Ventilation gewährleistet.

## Patentansprüche

1. Rotor für eine Vorrichtung mit fluider Betätigung, der sich um eine Achse dreht und wenigstens ein Blatt (1) umfasst, das sich entlang einer Linie erstreckt, die auf sich selbst zurückgeführt ist und wenigstens zwei Keulen (3, 6, 10, 11) umfasst, die sich von der Achse in ebenso vielen axial voneinander entfernten zentralen Punkten (4, 5) erstrecken, wobei ein zentraler Punkt ein Schnittpunkt zwischen dem Blatt und der Achse ist, wobei die Keulen wenigstens über eine Längenmehrheit der Linie gegenüber dem Strom des Fluids eine Oberfläche besitzen, die im Verhältnis zur entsprechenden radialen Ebene eine tangentiale Neigung besitzt, die ausgerichtet ist, um eine Fluidbewegungskomponente in der Rotationsrichtung des Rotors zu gewährleisten, **dadurch gekennzeichnet, dass** diese Neigung der Verformung entspricht, die per axiale Entfernung der Zentralpunkten (4, 5) von einem deutlich in einer zur Achse orthogonalen Ebene liegenden Blatt erreicht wird, und dass die der Achse nahen Teile des Blattes durchgehend sind.

2. Rotor gemäß Anspruch 1, **dadurch gekennzeichnet, dass** die Neigung der Vorderseite des im Querschnitt betrachteten Blattes in deutlich jeder axialen geometrischen Ebene zu der der Rückseite derart komplementär ist, dass der Rotor genau auf dieselbe Weise mit dem Strom des Fluids reagiert, ganz gleich, ob dieser sich in der einen oder in der anderen Richtung der Achse verschiebt, wobei die Rotation des Rotors ganz einfach die Richtung ändert.

3. Rotor gemäß Anspruch 1 und 2, **dadurch gekennzeichnet, dass** die Linie in der Formengruppe ausgewählt ist gemäß
- einer Linie in Form einer 8, die zwei diametral entgegengesetzte Keulen (3,6) bildet
- einer Linie in Form eines dreiblätterigen Kleeblattes (10)
- einer Linie in Form eines vierblätterigen Kleeblattes (11), die jeweils zu zweit diametral entgegengesetzt sind

4. Rotor gemäß Anspruch 1 bis 3, **dadurch gekennzeichnet, dass** die Entfernung zwischen den zentralen, axial beabstandeten Punkten (4, 5, 14, 15) einstellbar ist.

5. Rotor gemäß Anspruch 4, **dadurch gekennzeichnet, dass** die genannte Entfernung durch den Schub des Fluids veränderbar ist, indem einer der zentralen Punkte (4, 5) des Rotors auf der Achse im Verhältnis zum anderen mit optionaler Zwischenschaltung einer Feder frei gleiten gelassen wird.

6. Rotor gemäß Anspruch 1 bis 5, **dadurch gekennzeichnet, dass** der zentrale Teil des Rotors mit einer Wand (7) umgeben ist.

7. Vorrichtungen zur Betätigung eines Fluids oder die von einem Fluid mithilfe wenigstens eines Rotors gemäß Anspruch 1 bis 6 betätigt werden.

8. Vorrichtung gemäß Anspruch 7, umfassend eine feste Wand, die den Rotor umgibt und den Durchgang des Fluids bestimmt.

9. Vorrichtung gemäß Anspruch 8 für die Trennung von festen und / oder flüssigen Partikeln, die in Atmosphären oder gasförmigen Strömen enthalten sind, umfassend wenigstens einen Rotor (17), und die mit einer umlaufenden Wand (19) umgeben ist, die den die Partikel enthaltenden Luftstrom zu einem Ausgang leitet, wobei die Rotation des Rotors (17) sowohl den Antrieb dieses Stroms zum Ausgang hervorruft als auch die Partikel, die auf der vorgeschalteten Seite des Rotors aufschlagen, ableitet und sie somit gegen die innere Seite der genannten Wand (19) und / oder gegen eine zentrale Röhre (18) sendet, wobei die Partikel anschließend zu einem Austrag geleitet werden.

10. Vorrichtung gemäß Anspruch 9, **dadurch gekennzeichnet, dass** sie einen oder mehrere Rotor(en) (17), die frei in Rotation montiert sind und optional unterschiedliche Durchmesser in Führungsabschnitten von entsprechenden Durchmessern haben, umfasst.

11. Motorvorrichtung gemäß Anspruch 7 oder 8 für den Antrieb eines Bootes, wobei der Rotor als Schraube oder als Antrieb dient.

12. Vorrichtung gemäß Anspruch 7 oder 8 für die Erzeugung von Windenergie, umfassend an der Spitze eines Mastes, eine einen Rotor tragende Welle, die einen Stromgenerator antreibt, wobei der vorgeschaltete zentrale Punkt des Rotors an der Welle befestigt ist, während ihr zentraler nachgeschaltete Punkt bei gleichzeitiger fester Befestigung in Rotation entlang der Welle gegen eine elastische Rückholkraft gleiten kann.

13. Ventilationsvorrichtung gemäß Anspruch 7 oder 8, die am oberen Ende einer vertikalen Ventilationsleitung mit einer vertikal in der geometrischen Achse der Leitung montierten Welle angeordnet ist, die an ihrem unteren Ende einen ersten Rotor, dessen Rotation einen absteigenden Strom der Luft des zu ventilierenden Raums hervorruft, und an ihrem oberen Ende einen zweiten Rotor, der unabhängig von seiner horizontalen Richtung sensibel für Wind ist, trägt, wobei die Rotation des oberen Rotors die Welle und den unteren Rotor zum Drehen bringt.

## Claims

1. A rotor for a device with fluid actuation, which rotates on an axis and comprises at least one blade (1) which extends along a line which doubles backs on itself and comprises at least two loops (3, 6, 10, 11) which extend from the axis at the same number of axially remote central points (4, 5) and present, along at least the major part of the line, a surface area facing the fluid flow, which area presents, with regard to the corresponding radial plane, a tangential slope which is oriented to provide a fluid motion component in the same direction of rotation of the rotor, **characterized in that** said slope corresponds to the deformation which results from axially moving away from each other the central points of a blade which substantially lays in a plane perpendicular to the axis, and **in that** the parts of the blade close to the axis extend continuously.

2. A rotor according to claim 1, **characterized in that** the slope of the front side of the blade, considered in section in substantially each geometric axial plane, is complementary to the rear side, in such a way that the rotor identically reacts to the fluid flow, whatever it moves in one or in the other axial direction, whereby the rotation of the rotor just changes the direction.

3. A rotor according to claim 1 or 2, **characterized in that** the line is selected from the following group
- a line having an 8 form, which forms two diametrically opposed loops (3, 6)
- a line having a three-leaf clover form (10)
- a line having a four-leaf clover form where respectively two leaves are diametrically opposed.

4. A rotor according to claims 1 to 3, **characterized in that** the distance between the axially remote central points (4, 5, 14, 15) is adjustable.

5. A rotor according to claim 4, **characterized in that** said distance can be changed by the thrust of the fluid, where one of the central points (4, 5) of the rotor is free to slide with regard to the other one, optionally with a spring inserted therebetween.

6. A rotor according to claims 1 to 6, **characterized in that** the central part of the rotor is surrounded by a wall (7).

7. Devices for actuating a fluid or actuated by a fluid, through at least one rotor according to claims 1 to 6.

8. A device according to claim 7, comprising a solid wall surrounding the rotor and determining the crossing of the fluid.

9. A device according to claim 7 for the separation of solid and/or liquid particles contained in atmospheres or gaseous flows, comprising at least one rotor (17) which is circularly surrounded by a wall (19) which leads the air flow containing the particles to an exit, wherein the rotation of the rotor both drives this flow to the exit and deflects the particles ,which hit the front side of the rotor, and thus leads the particles toward the inner side of said wall and/or toward a central pipe (18), whereby the particles finally are conducted to a discharge.

10. A device according to claim 9 **characterized in that** it comprises one or several rotors (17) mounted for free rotation, and optionally having different diameters in guide sections of corresponding diameters.

11. A driving device according to claim 7 or 8 for driving a ship, wherein the rotor is used as a propeller or drive.

12. A device according to claim 7 or 8 for obtaining wind energy, comprising, on the top of a post, a shaft bearing a rotor and driving an electricity generator, wherein the front central point of the rotor is fastened to the shaft while its following central point is at same time rotationally fastened and free to slide along the shaft against an elastic return force.

13. A ventilation device according to claim 7 or 8 which is located on the top of a vertical ventilation duct with a shaft vertically mounted along the geometrical axis of the duct, comprising at its lower end a first rotor whose rotation drives an ascendant flow of the air of the space to be ventilated, and on its upper end a second rotor responsive to the wind, independently of its horizontal direction, wherein the rotation of the upper rotor leads to the rotation of the shaft and the lower rotor.

## Revendications

1. Rotor pour un dispositif actionné par fluide, tournant autour d'un axe et comprenant au moins une bande (1), s'étendant le long d'une ligne, qui revient sur elle-même et comporte au moins deux boucles (3, 6, 10, 11) qui s'étendent depuis l'axe en autant de points centraux (4, 5) axialement écartés l'un de l'autre, les boucles possédant, au moins sur une majorité de longueur de la ligne, une surface opposée au flux du fluide, et qui possède, par rapport au plan radial correspondant, une inclinaison tangentielle orientée pour établir une composante de mouvement de fluide dans la même direction de rotation du rotor, **caractérisé en ce que** cette inclinaison correspond à la déformation obtenue par éloignement axial des points centraux (4, 5) d'une bande disposée dans un plan sensiblement orthogonal à l'axe, et **en ce que** les portions de la bande proches de l'axe sont continues.

2. Rotor selon la revendication 1, **caractérisé en ce que** l'inclinaison de la face antérieure de la bande, vue en coupe dans sensiblement chaque plan axial géométrique, est complémentaire à celle de la face postérieure, de telle façon que le rotor réagisse exactement et de la même manière au flux de fluide, que ce dernier se déplace dans une direction de l'axe ou dans l'autre, la rotation du rotor changeant simplement de sens.

3. Rotor selon l'une des revendications 1 et 2, **caractérisé en ce que** la ligne est sélectionnée dans le groupe de formes, à savoir
une ligne en forme de 8, qui forme deux boucles diamétralement opposées (3, 6)
une ligne en forme de trèfle à trois feuilles (10)
une ligne en forme de trèfle à quatre feuilles (11), dont deux sont chaque fois diamétralement opposées.

4. Rotor selon l'une des revendications 1 à 3, **caractérisé en ce que** l'écartement entre les points centraux axialement éloignés (4, 5, 14, 15) est réglable.

5. Rotor selon la revendication 4, **caractérisé en ce que** ledit écartement est modifiable par la poussée du fluide, du fait que l'un des points centraux (4, 5) du rotor est laissé libre de glisser sur l'axe par rapport à l'autre, avec interposition ooptionnelle d'un ressort.

6. Rotor selon la revendication 4, **caractérisé en ce que** la partie centrale du rotor est entourée d'une paroi (7).

7. Dispositifs pour actionner un fluide ou pour être actionné par un fluide, à l'aide d'au moins un rotor selon l'une des revendications 1 à 6.

8. Dispositif selon la revendication 7, comprenant une paroi fixe entourant le rotor et déterminant la traversée du fluide.

9. Dispositif selon la revendication 8 pour la séparation de particules solides et/ou liquides contenues dans des atmosphères ou des courants gazeux, comprenant au moins un rotor (17), et qui est entouré d'une paroi (19) l'entourant circulairement et qui conduit le flux d'air contenant les particules vers une sortie, la rotation du rotor (17) assurant aussi bien l'entrainement de ce flux vers sa sortie que la déviation des particules qui viennent frapper le coté antérieur du rotor, ce qui les envoie vers la face interne de ladite paroi (19) et/ou vers un tube central (18), de sorte que les particules sont finalement dirigées vers une évacuation.

10. Dispositif selon la revendication 9, **caractérisé en ce qu'**il comprend un ou plusieurs rotors (17) montés libres en rotation et, optionnellement, possédant des diamètres différents dans des sections de guidage de diamètres correspondants.

11. Dispositif moteur selon la revendication 7 ou 8 pour l'entrainement d'une embarcation, le rotor servant d'hélice ou de propulseur.

12. Dispositif selon la revendication 7 ou 8 pour obtenir de l'énergie du vent, comprenant, au sommet d'un mât, un arbre portant un rotor qui entraine une génératrice de courant, le point central antérieur du rotor étant fixé à l'arbre, tandis que le point central suivant peut coulisser le long de l'arbre à l'encontre d'une force élastique de rappel tout en y étant fixé solidairement en rotation.

13. Dispositif de ventilation selon la revendication 7 ou 8, disposé à l'extrémité supérieure d'un conduit vertical de ventilation avec un arbre monté verticalement selon l'axe géométrique du conduit et portant, à son extrémité inférieure, un premier rotor, dont la rotation provoque un flux ascendant de l'air du local à ventiler, et, à son extrémité supérieure, un second rotor sensible au vent indépendamment de sa direction horizontale, la rotation du rotor supérieur entrainant la rotation de l'arbre et du rotor inférieur.
